# EUROPEAN PATENT APPLICATION

(11) **EP 2 693 690 A1**
(43) Date of publication of application: **05.02.2014**
(21) Application number: 12305970.1
(22) Date of filing: 03.08.2012
(51) Int. Cl.: H04L 12/24

(54) **A method, and a node for discovering a network topology**

(71) Applicant: Alcatel Lucent, 75007 Paris (FR)
(72) Inventor: Klotsche, Ralf, 75305 Neuenbuerg (DE); Sienel, Jürgen, 71229 Leonberg (DE)
(74) Representative: Kleinbub, Oliver

(57) **Abstract**

The invention concerns a method for making a network topology discovery, comprising:
maintaining a mapping of positions of network nodes (101, 102, 103) of a part of the network as information about the network topology, by
- sending (305, 404) a first message comprising information about a predetermined target position, and
- transmitting (306, 405) a second message comprising information about a network node (101, 102, 103), in particular located within a predetermined distance or direction from the predetermined target position.

## Description

### Field of the invention

The invention relates to a method, and a node for making a network topology discovery,

### Background

Network topology is the arrangement of the various elements (links, nodes, etc.) of a computer network. Essentially, it is the topological structure of a network, and may be depicted physically or logically. Physical topology refers to the placement of the network's various components, including device location and cable installation, while logical topology shows how data flows within a network, regardless of its physical design. Distances between nodes, physical interconnections, transmission rates, and/or signal types may differ between two networks, yet their topologies may be identical,

CHORD is a protocol and algorithm for a peer-to-peer distributed hash table. A distributed hash table stores key-value pairs by assigning keys to different computers (known as "nodes"); a node will store the values for all the keys for which it is responsible. CHORD specifies how keys are assigned to nodes, and how a node can discover the value for a given key by first locating the node responsible for that key.

CHORD however is not suitable to make network topology discovery.

### Summary

The object of the invention is to improve the network topology discovery.

The main idea of the invention is to make a network topology discovery, comprising:
maintaining a mapping of positions of network nodes of a part of the network as information about the network topology, by
   - sending a first message comprising information about a predetermined target position, and
   - transmitting a second message comprising information about a network node, in particular located within a predetermined distance or direction from the predetermined target position.

Considering the positions of the network nodes as information about the network topology in the mapping rather than hash values improves the performance of the network topology discovery.

Advantageously the method for discovering more than one network node close to more than one predetermined target position, comprises determining more than one predetermined target position, wherein the distances between individual predetermined target positions is non-linearly, in particular logarithmical, spaced. Rather than using linearly spaced distances, this further improves the performance.

Advantageously the discovery comprises:
- determining the distance between the predetermined position of a first network node and the predetermined target position,
- determining the distance between the predetermined position of the second network node and the predetermined target position,

- sending the first message comprising information about the target position from the first network node to the second network node, if the distance between the second network node and the predetermined target position is shorter than the distance between the first network node and the predetermined target position,
- sending, by the first network node, the second message comprising information about an address of the first network node, otherwise.

This way a request to get the node nearest to the target position is either forwarded by the first node receiving this request to another node closer to the requested target position if such closer node is known by the first node, or in case the first node doesn't know about any closer node, the closest node has been discovered and information about the network address of the first node returned to the requesting node instantaneously.

Advantageously the distance is determined as difference between a time that the first message is sent, in particular from the first network node, and the time the second message is received, in particular by the first network node.

Advantageously the second message is sent instead of the first message when a predetermined time to live condition for the network topology discovery is met. This way the time to live for a request for the nearest node to the predetermined target position is limited. For example the hop count may be used to ensure that a response is send to the requestor after the predetermined number of hops.

Advantageously the distance is determined depending on the round trip time between the network node sending the first message and the network node sending the second message.

Advantageously the predetermined target position or the position of the nodes is a position relative to a predetermined origin of a predetermined coordinate system, in particular describe as a vector, a pair of distance and direction or using the coordinates of the coordinate system.

Advantageously the mapping is initialized to contain location information stored as direction and distance, or additional information about the nodes, in particular load of a node or cost to reach it.

Further developments of the invention can be gathered from dependent claims and the following description.

### Brief description of the figures

In the following the invention will be explained further making reference to the attached drawings.
Fig. 1 schematically shows a first part of a network.
Fig. 2 schematically shows positions of nodes and predetermined target positions of a network topology.
Fig. 3 schematically shows a first flow chart.

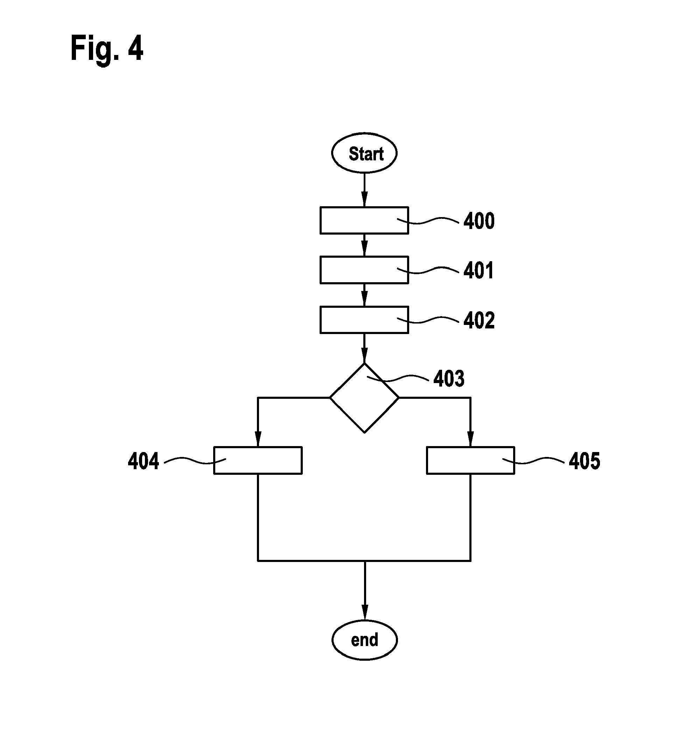

Fig. 4 schematically shows a second flow chart.

### Description of the embodiments

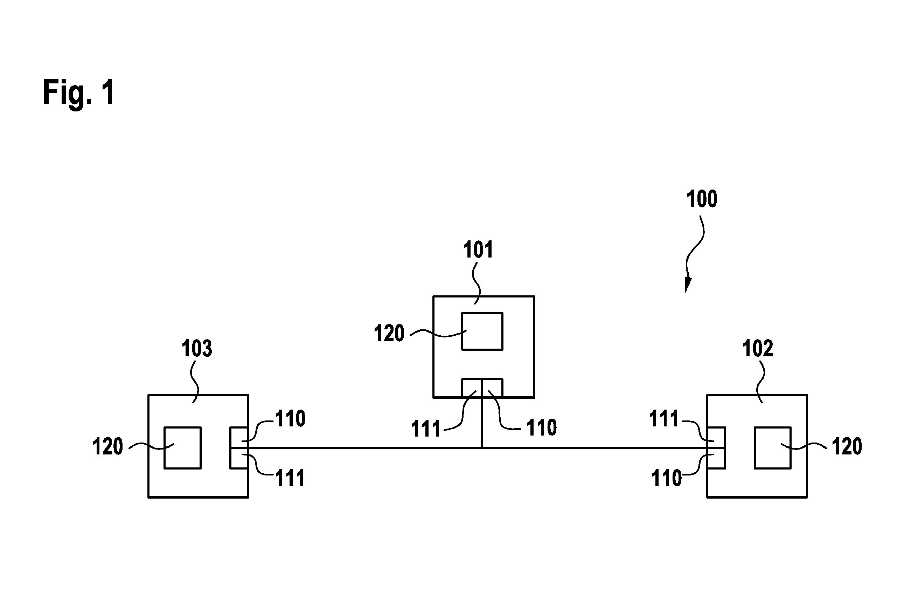

Figure 1 shows a part of a network 100. The network 100 is for example a computer network or a telecommunications network.

Said network 100 comprises a first network node 101, a second network node 102 and a third network node 103.

Said nodes 101, 102, 103, are connected for example via local area network (LAN), wireless local area network (WLAN, 802.11n) or wide area network (WAN) or any mix of them, wired or wireless. Said connection is for example according to the well known internet protocol (IP), user datagram protocol (UDP), transmission control protocol (TCP) or stream control transmission protocol (SCTP). Signaling is for example according to the well known Simple Object Access Protocol (SOAP), Representational State Transfer (REST) or session initiation protocol (SIP). Addressing may be done using the well known uniform resource locators (URL), uniform resource identifiers (URI), names or namespaces of extensible markup language or Internet Protocol addresses like the well known IPv4 or IPv6 addresses.

The connection can but must not be directly between the devices. The typical use is on wide area networks with multiple intermediate devices which are not regarded as nodes here.

The predetermined target position or the position of the nodes is a position relative to a predetermined origin of a predetermined coordinate system, in particular described as a vector, a pair of distance and direction or using the coordinates of the coordinate system. In the example a two dimensional Cartesian coordinate system is used to describe the distances between the nodes. An n-dimensional or spherical coordinate system may be used as well.

The mapping of nodes is initialized to contain location information stored as direction and distance, or additional information about the nodes, in particular CPU, network (well known as IO) or memory load of a node or cost to reach it, i.e. delay, latency, number of hops or money.

The mapping in the example is stored on a memory on each node. In the example each node contains a local view of the network topology, i.e. only information about a part of the network. In the example tables are used to store the information. Each node has one table for the information about the node itself and a predetermined number of tables for storing information about the part of the network.

In the example the table for the first network node 101 is initialized as follows:

| | |
|---|---|
| IPaddr | 192.0.2.1 |
| Location | 6,4 |
| ID | 101 |
| CPU Load | - |
| IO Load | - |

In the example the table for the second network node 102 is initialized as follows:

| | |
|---|---|
| IPaddr | 192.0.2.2 |
| Location | 3,8 |
| ID | 102 |
| CPU Load | - |
| IO Load | - |

In the example the table for the third network node 103 is initialized as follows:

| | |
|---|---|
| IPaddr | 192.0.2.3 |
| Location | 8,9 |
| ID | 103 |
| CPU Load | - |
| IO Load | - |

IPaddr in this context refers to the Internet Protocol Version 4 address of the node, Location to the Cartesian coordinates of the node in the network topology, ID to the identifier of the node that the table is for. Optionally the fields for CPU Load or IO Load may be initialized or not. Instead of IPaddr and ID only the IPaddr may be used as well. Any other type of address or additional information may be stored and any other type of identifier or name may be used.

The tables for storing are exemplary for any of the nodes, e.g. the first network node 101, second network node 102 or third network node 103. other ways of storing this information, e.g. in arrays or in a database may be used.

In the example the number of tables stored on each of the nodes is limited to 13. The table containing the information about the node itself is stored. This means that on each node 12 other tables can be stored. Therefore each node has information about itself and three other nodes in four directions, i.e. in total 12 other nodes, once all tables are stored. In other words, the size of the part of the network that is visible for each node is limited depending on the number of entries stored in its tables. By choosing the number of tables that can be stored on an individual node, the memory size used for storing can be adjusted. Furthermore the discovery efficiency can be adjusted, e.g. by increasing the number of tables that can be stored to increase the visible part of the network topology and make the discovery faster.

Not all of the nodes have to have the same configuration. This means that the number of tables to be stored can be individually adjusted for each node.

Exemplary for the first network node 101, the second network node 102 or the third network node 103, the first network node 101 for making a network topology discovery is described below. The first network node 101 is operable to maintain a mapping of positions of network nodes of a part of the network 100 as information about the network topology. The first network node 101 comprises a sender 110 operable to send a first message comprising information about a predetermined target position, and a receiver 111 operable to receive a second message comprising information about a network node, in particular located within a predetermined distance or direction from a predetermined target position. In the example the combination of distance and direction is used to unequivocally describe the predetermined target position.

Sending and receiving of the messages is referred to as part of transmitting the messages. The sender 110 and the receiver 111 may be a combined transceiver as well.

The first message comprises for example the sender's address, the recipients address and payload. The receiver 111 is adapted to store the address of the sender of the first message.

The payload comprises for example information indicating that the message contains a network topology discovery request. For example the payload comprises information about the predetermined target position and the position and address of the node making the network topology discovery.

Optionally the payload comprises information about the predetermined distance or direction. In the example the predetermined distance and direction are enclosed.

Optionally the payload comprises for example a time to live information. The time to live information is for example a maximum number of hops the request shall live. A hop in this context occurs every time the request is passed from a node to another node. For example if the first node 101 sends the first message to the second node 102, a hop occurs. This information is for example stored as an integer value in the respective payload. The sender 110 is for example adapted to manipulate the time to live information in the payload. For example the time to live information is set to a predetermined value, e.g. an integer value of 5, in case the first message is initialized by the sender 110 of the first node 101. The sender 110 is furthermore adapted to change the time to live information depending on conditions described in the methods below. For example the time to live information is decreased by the sender 110, e.g. by an decrement of 1, any time the sender 110 determines that the first message to send was triggered by a previous first message received by the receiver 111. To that end the receiver 111 is adapted to receive the first message and the time to live information and store it temporarily.

The second message for example comprises the sender's address, the recipients address and payload.

The payload of the second message comprises for example the sender's address or information indicating that the message contains information about the network topology.

The addresses in the messages are for example according to the well known Internet Protocol.

The sender 110 and the receiver 111 are adapted to send and receive the messages using the well known Internet Protocol. Any other sender or receiver may be used as well.

Furthermore the first network node 101 comprises a processor 120 adapted to determine the distance between the predetermined position of the first network node 101 and the predetermined target position on the one hand, and to determine the distance between the predetermined position of the second network node 102 and the predetermined target position.

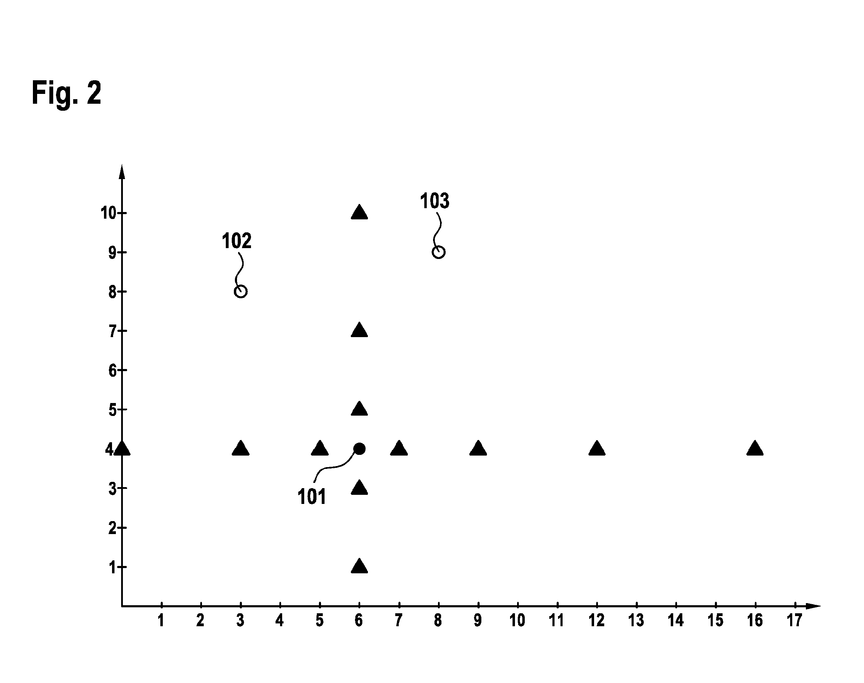

Furthermore the first network node 101 is operable to discover one or more than one network node close to one or more than one predetermined target positions. To that end the first network node 101 comprises a processor 120 adapted to determine one or more than one predetermined target positions. The target positions are for example determined by the processor to be any position in the network topology to be discovered. For example, as depicted in figure 2 starting from the position of the first network node 101, target positions are selected that lay in direction of a line parallel to any of the axis of the Cartesian coordinate system and having a predetermined distance from the first network node 101. The direction is arbitrarily chosen in the example to be parallel to the axes. Any other predetermined direction may be selected. The distance between individual predetermined target positions is predetermined and preferably selected to be non-linearly, in particular logarithmical, spaced with increasing distance from the first network node 101. This allows a good coverage of the network topology when the discovery is made and at the same time reduces memory required to store the information.

Furthermore the sender 110 is adapted to send one or more first messages comprising information about the one or more target positions from the first network node 101 to the second network node 102, if the distance between the second network node 102 and the predetermined target position is shorter than the distance between the first network node 101 and the predetermined target position.

To that end the sender 110 is adapted to determine the distances from the predetermined target position and the position information for the first network node 101 and the second network node 102, i.e. the location entry of the respective table. The sender 110 is adapted to compare the distances and send the first message if the abovementioned condition is met.

In case the condition is not met, the first network node 101 is closer than the second network node 102 to the target position. In this case for example the entry for the third network node 103 is used to repeat the distance comparison for the first network node 101 and the third network node 103. In case more tables for other network nodes exist, the sender 110 is adapted to repeat the same steps until a node closer to the predetermined target position than the first network node 101 is found.

In case no closer node can be found, the first network node 101 is itself the requested node and no first message is sent.

Instead the address, e.g. the IPaddr, of the first network node 101 is the desired result of the network topology discovery. In this case the sender 110 is adapted to send the second message.

The propagation of the discovery is explained below making reference to figure 2. According to this example information about the first network node 101 and the second network node 102 is already available, e.g. by means of the aforementioned tables for the first network node 101 and the second network node 102. The third network node 103 is already part of the network 100. According to this example information, e.g. the aforementioned table for the third network node 103, is stored on the second network node 102 already but no information about it is stored on the first network node 101. This means the first network node 101 doesn't know about the third network node 103 yet but does know the second network node 102.

In the case of 13 storage positions, the processor 120 determines 12 predetermined target positions. Eleven of these target positions are depicted in figure 2 as triangles at (0,4) (3,4), (5,4), (7,4), (9,4), (12,4), (6,3), (6,1), (6,3), (6,7) and (6,10). The position (6, -2) is not depicted.

The sender 110 successively determines the distances as described above and determines whether to send the first message to the second network node 102 or not. For the predetermined target positions (3,4), (5,4), (7,4), (9,4), (12,4), (6,3), (6,1), (6,3) and (6,7) it is determined that the first network node 101 is closer and hence tables for each of the target positions with the IPaddr of the first network node 101 are created to indicate that the closest existing network node is the first network node 101 itself.

For the predetermined target position (0,4) it is determined that the second network node 102 is closer than the first network node 101 and the first message is sent to the second network node 102.

Upon the receipt of the first message, the second network node 102 is adapted to determine whether a table having an entry with a shorter distance to the predetermined target position than the second network node 102 exists on the second network node 102 or not. To that end the sender 110 performs the same distance calculation as described above. In the case of the predetermined target position (0,4) the second network node 102 is closer than the third network node 103. Therefore the sender of the second network node 102 sends the second message comprising the address of the second network node 102 to the first network node 101.

Upon receipt of the second message the first network node 101 discovers that the second network node 102 is the closest known node to the predetermined target address and creates the table for the target position (0,4) with the IPaddr of the second network node 102.

Optionally CPU load or IO Load may be sent as well in the second message and received and stored on the first network node 101.

In case of the predetermined target position (6,10) the first network node 101 determines that the second network node 102 is closer than the first network node 101. Hence the first message is sent to the second network node 102 including the predetermined target position (6,10). The second network node 102, upon receipt of the first message determines that the third network node 103 is even closer to the predetermined target position (6,10) than itself. Hence the sender 110 of the second network node 102 sends the first message to the third network node 103.

The third network node 103 upon receipt of the first message determines if information is stored on the third network node 103 indicating any other node closer to the predetermined target position. In the example this is not the case and hence the sender 110 of the third network node 103 sends the second message containing the IPAddr of the third network node 103 to the first network node 101 directly.

Upon receipt of the second message the first network node 101 discovers and stores the table with the IPAddr off the third network node for the position (6,10).

This way the information about the network node known to be nearest to the predetermined target position is discovered.

For previously unknown network nodes, the distance is for example determined depending on the round trip time, well known as RTT, between the first network node 101, and the third network node 103. This round trip time can be calculated for example by sending an additional message from the first network node 101 to the third network node 103 directly and another additional message from the third network node 103 to the first network node 101 directly in response to receiving the additional message. To this end the additional messages comprise a time stamp indicative of the time that the additional messages are sent. Then the distance is determined depending on the round trip time by calculating the distance to be the half round trip time. Optionally several of the additional messages may be exchanged between the first network node 101 and the third network node 103 to determine an average round trip time. In this case the distance is calculated as half of the average round trip time. To that end either of the network nodes 101, 102, 103 is adapted to send the respective additional messages, calculate the round trip time and the distance.

The predetermined target position or the position of the nodes may be a position relative to a predetermined origin of any predetermined coordinate system, in particular described as a vector, a pair of distance and direction or using the coordinates of the coordinate system.

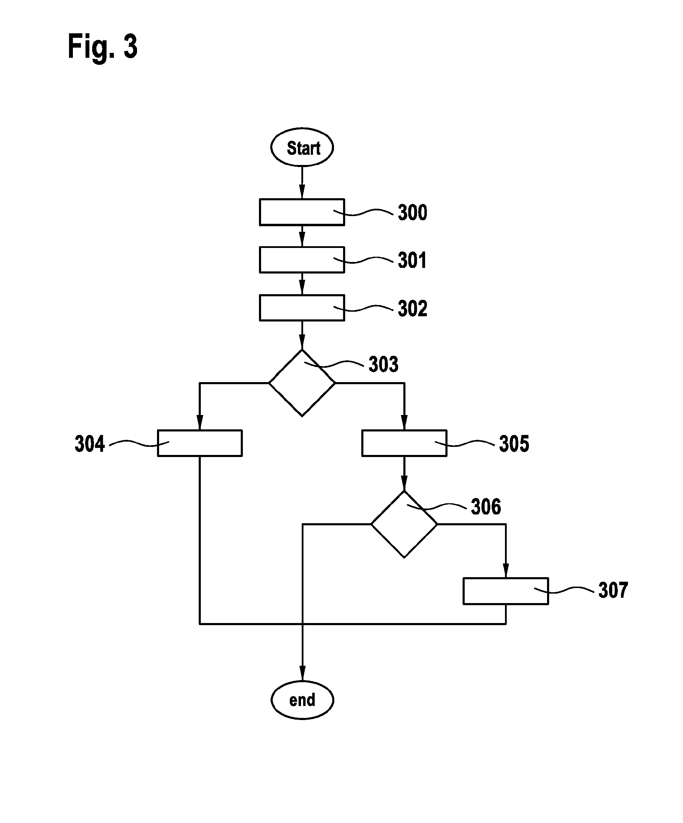

A method for making a network topology discovery is described below as it would execute on the first network node 101, making reference to figure 3. The same method may be executed on any other network node, in particular on the second network node 102 or the third network node 103.

Goal of the method is maintaining a mapping of positions of network nodes of a part of the network as information about the network topology.

The method applies to discovering one or more than one network node close to one or more than one predetermined target position. To that end before the start one or more predetermined target position are determined. The target positions are for example determined by selecting the direction and distance from the origin. Referencing figure 2, the coordinates (0,4) (3,4), (5,4), (7,4), (9,4), (12,4), (6,3), (6,1), (6,3), (6,7) and (6,10) are determined as predetermined target positions.

The method may be repeated by determining more predetermined target position, wherein a direction is selected and the distances between individual predetermined target positions in the same direction from the origin is preferably non-linearly, in particular logarithmical, spaced.

In a first embodiment discovering the network topology is described below referencing figure 3 and using as example for the predetermined target position the coordinates (3,4), (0,4) and (6,10) as depicted in figure 2.

In this case the first network node 101 is initiating the network topology discovery itself

In a second embodiment discovering the network topology is described below using as example the coordinates (3,4), (0,4) and (6,10) as depicted in figure 2. In this case the first network node 101 receives a request for a nearest node in the network topology, i.e. receives the first message.

According to all of the examples the first network node 101 is at the coordinates (6,4) and comprises information about the first network node 101 and the second network node 102. The second network node 102 is at the coordinates (3,8) and comprises information about the third network node 103 which is at coordinates (8,9). This information is for example stored as the respective tables on the node having the respective information.

The method according to the first embodiment starts for example whenever the first network node 101 is connected to the network 100.

After the start a step 300 is executed.

In the step 300 a new predetermined target position is determined. For example (3,4) or (0,4) is determined.

Predetermined target position can in the example be either selected by the first network node 101 from a predetermined list of predetermined target positions or calculated frequently and repeatedly using above mentioned non-linear, preferably logarithmic scaling.

The method is for example started frequently by the processor 120 of the first network node 101.

Afterwards a step 301 is executed.

In the step 301 the distance between the predetermined position of a first network node 101, e.g. (6,4) and the predetermined target position, e.g. (3,4), (0,4) or (6,10) is determined. The distance in the examples is 2, 6 or 6. Afterwards a step 302 is executed.

In the step 302 the distance between the predetermined position of the second network node 102, e.g. (3,8) and the predetermined target position, e.g. (3,4), (0,4) or (6,10) is determined. The distance in the example is 4, 5 or 3.6. Afterwards a step 303 is executed.

In the step 303, a test is performed to determine which distance is shorter. If the distance between the second network node 102 and the predetermined target position is shorter than the distance between the first network node 101 and the predetermined target position a step 304 is executed. Otherwise the method continues with a step 305. In the example the distance between the second network node 102 and the predetermined target position is 4, 5 or 3.6, whereas the distance between the first network node 101 and the predetermined target position is 2, 6 or 6. This means that distance between the second network node 102 and the predetermined target position is not shorter, shorter or shorter than the distance between the first network node 101 and the predetermined target position.

In step 304 the information about the network topology is discovered for the predetermined target position. This is for example the case for the predetermined target position at coordinates (3,4). For example the following table is created and stored in that case:

| | |
|---|---|
| IPaddr | 192.0.2.1 |
| Location | 3,4 |
| ID | 1 |
| CPU Load | - |
| IO Load | - |

The IPaddr in this example is the address of the first network node 101 which is the closest node to the location (3,4). The ID can be any identifier, e.g. ID is 1. In case CPU Load or IO Load is available for the first network node 101, this information may be stored as well. Afterwards the method ends.

In step 305 the first message is sent to the second network node 102. In the example the coordinates (0,4) or (6,10) are sent. Optionally the time stamp is sent in the first message as well.

Afterwards a step 306 is executed.

In step 306, a test is performed to determine if the second message has been transmitted, e.g. sent and received, before a time out condition is met. The sending of the second message will be explained below.

In case the second message has been received before the time out condition is met, a step 307 is executed. Otherwise the method ends.

In step 307 the information about the network topology is discovered for the predetermined target position is determined from the second message. This is for example the case for the predetermined target position at coordinates (0,4). For example the second message contains information from the second network node 102 comprising the IPaddr e.g. 192.0.2.2, the ID e.g. 102, the location (3,8) and optionally the time stamp, CPU e.g. 30% or IO Load e.g. 10%. From this information the following table is created and stored in that case:

| | |
|---|---|
| IPaddr | 192.0.2.2 |
| Location | 3,8 |
| ID | 102 |
| CPU Load | 30% |
| IO Load | 10% |

The IPaddr in this example is the address of the second network node 102 which is the closest node to the location (0,4). The ID is the ID of the second network node 102. In case CPU Load or IO Load is available for the second network node 102, this information may be stored as well.

For the predetermined target position at coordinates (6,10), for example the second message contains information from the third network node 103 comprising the IPaddr e.g. 192.0.2.3, the ID e.g. 103, the location (8,9) and optionally the time stamp, CPU e.g. 87% or IO Load e.g. 77%. From this information the following table is created and stored in that case:

| | |
|---|---|
| IPaddr | 192.0.2.2 |
| Location | 6,10 |
| ID | 103 |
| CPU Load | 87% |
| IO Load | 77% |

The IPaddr in this example is the address of the third network node 103 which is the closest node to the location (6,10). The ID is the ID of the third network node 103. In case CPU Load or IO Load is available for the third network node 103, this information may be stored as well.

Optionally the decision to store or not store the received information may depend on whether the round trip time between the first network node 101 and the third network node 103 exceeds a predetermined maximum round trip time or not. Consequently the information may be stored only if the round trip time is not too long. To that end either of the network nodes 101, 102, 103 may be adapted to base the decision to store or not to store the received information the round trip time.

When repeating the method to discover more or other network nodes, the location information or the round trip time may also be used to determine which of the previously stored information to replace by newer information. The new information for example replaces the previously stored information in case it describes a network node closer to a target location or having less round trip time. Likewise the CPU Load or IO Load may be used. Afterwards the method ends.

This means that to make a network topology discovery a mapping of positions of network nodes of a part of the network as information about the network topology is maintained, by
- sending the first message comprising information about a predetermined target position, and
- receiving the second message comprising information about a network node, in particular located within a predetermined distance from the predetermined target position.

The mapping may be initialized to contain location information stored as direction and distance, or additional information about the nodes, in particular load of a node or cost to reach it. This information may be stored in the tables on the respective network nodes before the method starts.

The method according to the second embodiment is started for example when a request for network discovery is received from another network node. This request is for example the first message sent by another network node in order to discover network topology. In the example the sending node is the first network node 101 and the receiving node is the second network node 102. To illustrate the coordinates (0,4) or (6,10) are used as predetermined target position in the first message. Afterwards a step 400 is executed.

In step 400 the address of the sender of the first message and optionally the time stamp are stored. Afterwards a step 401 is executed.

In the step 401 the distance between the predetermined position of the second network node 102, e.g. (3,8) and the predetermined target position, e.g. (0,4) or (6,10) is determined. The distance in the examples is 5 or 3.6. Afterwards a step 402 is executed.

In the step 402 the distance between the predetermined position of the third network node 103, e.g. (8,9) and the predetermined target position, e.g. (0,4) or (6,10) is determined. The distance in the example is 9.4 or 2.2. Afterwards a step 403 is executed.

In the step 403, a test is performed to determine which distance is shorter. If the distance between the third network node 103 and the predetermined target position is shorter than the distance between the second network node 102 and the predetermined target position a step 404 is executed. Otherwise the method continues with a step 405. In the example the distance between the third network node 103 and the predetermined target position is 9.4 or 2.2, whereas the distance between the second network node 102 and the predetermined target position is 5 or 3.6. This means that the distance between the third network node 103 and the predetermined target position is not shorter or shorter than the distance between the second network node 102 and the predetermined target position.

This means that it is determined if a network node closer than the receiving node, i.e. the second network node 102, is known on the second network node 102. To that end for example location information from the table entries of the tables stored on the second network node 102 are read. This may be repeated for all stored tables to determine the network node with the shortest known distance from the predetermined target location.

In step 404 the first message is sent from the second network node 102 to the third network node 103 using the address of the third network node 103 stored on the second network node 102, e.g. in the table for the third network node 103. The first message contains the address of the first network node 101, the predetermined target position, in the example at the coordinates (6,10), and optionally the time stamp stored in step 400.

### Afterwards the method ends.

In step 405, the second message is transmitted, e.g. sent from the second network node 102 to be received by the first network node 103 using the address of the first network node 101 and optionally the time stamp stored in step 400. Furthermore the second message contains the address the location, the ID and optionally the CPU Load or IO Load of the second network node 102.

In case of the predetermined target position at coordinates (0,4) for example the second message contains information from the second network node 102 comprising the IPaddr e.g. 192.0.2.2, the ID e.g. 102, the location (3,8) and Optionally the time stamp, CPU e.g. 30% or IO Load e.g. 10%. The IPaddr in this example is the address of the second network node 102 which is the closest node to the location (0,4 . The ID is the ID of the second network node 102. In case CPU Load or IO Load is available for the second network node 102, this information may be stored as well.

### Afterwards the method ends.

This means that to make a network topology discovery a mapping of positions of network nodes of a part of the network as information about the network topology is maintained, by
- sending the first message comprising information about a predetermined target position, and
- receiving the second message comprising information about a network node, in particular located within a predetermined distance from the predetermined target position.

The first message send from the second network node 102 to the third network node 103 for the example of the predetermined target position (6,10) triggers the method on the third network node 103. This means that the third network node 103 for this example sends the second message to the first network node 101. For the predetermined target position at coordinates (6,10) this means that in the second message information from the third network node 103 comprising the IPaddr e.g. 192.0.2.3, the ID e.g. 103, the location (8,9) and optionally the time stamp, CPU e.g. 87% or IO Load e.g. 77% is send

Optionally time to live information, e.g. the maximum number of hops, included in the first message indicates that the discovery request has reached the maximum time to live or not. In this case for example the integer value is evaluated as soon as the first message is received. If the time to live has passed, e.g. if the integer value indicates 0, it is determined whether to send the second message instead of the first message. For example the step 405 is executed immediately in this case to provided the address of the current network node or in an optional modification of the method. Alternatively step 404 is modified to send the information about the closest known network node in the second message.

For the predetermined target position at coordinates (6,10) this means that in the second message information from the third network node 103 comprising the IPaddr e.g. 192.0.2.3, the ID e.g. 103, the location (8,9) and optionally the time stamp, CPU e.g. 87% or IO Load e.g. 77% is send instead of sending information about the second network node 102. The IPaddr in this example is the address of the third network node 103 which is the closest node to the location (6,10). The ID is the ID of the third network node 103. In case CPU Load or IO Load is available for the third network node 103, this information may be stored as well.

Optionally the first message comprises information about the predetermined area, e.g. a radius of 0.5. In this case a test is performed to determine if information about a network node at or close to the predetermined target position, e.g. at position (0,4) or within radius of 0.5 around position (0,4) exists. In this case from all known network nodes the one is picked that is in the predetermined area. Information about this node is then sent in the second message. This way information about the network node located within a predetermined distance from the predetermined target position is discovered.

The invention also concerns a computer program for making a network topology discovery, wherein said computer program, when executed on a computer, causes the computer to perform the steps of the methods described above.

The description and drawings merely illustrate the principle of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts represent various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for making a network topology discovery, **comprising:**
maintaining a mapping of positions of network nodes (101, 102, 103) of a part of the network as information about the network topology, by
- sending (305, 404) a first message comprising information about a predetermined target position, and
- transmitting (306, 405) a second message comprising information about a network node (101, 102, 103), in particular located within a predetermined distance or direction from the predetermined target position.

2. method according to claim 1 for discovering more than one network node (101, 102, 103) close to more than one predetermined target position, comprising determining (300, 400) more than one predetermined target position, wherein the distances between individual predetermined target positions is non-linearly, in particular logarithmical, spaced.

3. The method according to claim 1 or 2, comprising:
- determining (401) the distance between the predetermined position of a first network node and the predetermined target position,
- determining (402) the distance between the predetermined position of the second network node and the predetermined target position,
- sending (404) the first message comprising information about the target position from the first network node to the second network node, if the distance between the second network node and the predetermined target position is shorter than the distance between the first network node and the predetermined target position, and
- sending (405), by the first network node, the second message comprising information about an address of the first network node, otherwise.

4. The method according to any of the aforementioned claims, wherein the distance is determined as difference between a time that the first message is sent, in particular from the first network node, and the time the second message is received, in particular by the first network node.

5. The method according to claim 4, wherein the distance is determined depending on the round trip time, between the network node sending the first message and the network node sending the second message.

6. The method according to any of the aforementioned claims, wherein the predetermined target position or the position of the nodes (101, 102, 103) is a position relative to a predetermined origin of a predetermined coordinate system, in particular described as a vector, a pair of distance and direction or using the coordinates of the coordinate system.

7. The method according to any of the aforementioned claims, wherein the mapping is initialized to contain location information stored as direction and distance, or additional information about the nodes, in particular load of a node or cost to reach it.

8. The method according to any of the aforementioned claims, wherein the second message is sent instead of the first message when a predetermined time to live condition for the network topology discovery is met.

9. A node (101, 102, 103) for making a network topology discovery, **operable to** maintain a mapping of positions of network nodes of a part of the network as information about the network topology, comprising
- a sender (110) operable to send (305, 404) a first message comprising information about a predetermined target position, and
- a transmitter (111, 110) operable to transmit (306, 405) a second message comprising information about a network node (101, 102, 103), in particular located within a predetermined distance or direction from the predetermined target position.

10. The node (101, 102, 103) according to claim 9, operable to discover more than one network node (101, 102, 103) close to more than one predetermined target position, comprising a processor (120) adapted to determine more than one predetermined target position, wherein the distance between individual predetermined target positions is non-linearly, in particular logarithmical, spaced.

11. The node (101, 102, 103) according to claim 9 to 10, the processor (120) being adapted to:
- determine (401) the distance between the predetermined positions of the first network node (101, 102, 103) and the predetermined target position,
- determine (402) the distance between the predetermined position of the second network node (101, 102, 103) and the predetermined target position, and
the sender (110) being adapted to:
- send (404) the first message comprising information about the target position from the first network node (101, 102, 103) to the second network node (101, 102, 103), if the distance between the second network node (101, 102, 103) and the predetermined target position is shorter than the distance between the first network node (101, 102, 103) and the predetermined target position, and
- send (405), by the first network node (101, 102, 103), the second message comprising information about an address of the first network node (101, 102, 103), otherwise.

12. The node (101, 102, 103) according to claims 9 to 11,
wherein the distance is determined as difference between a time that the first message is sent, in particular from the first network node (101, 102, 103), and the time the second message is received, in particular by the first network node (101, 102, 103).

13. The node (101, 102, 103) according to claim 12, wherein the distance is determined depending on the round trip time between the network node sending the first message and the network node sending the second message.

14. The node (101, 102, 103) according to claims 9 to 13,
wherein the predetermined target position or the position of the nodes is a position relative to a predetermined origin of a predetermined coordinate system, in particular described as a vector, a pair of distance and direction or using the coordinates of the coordinate system.

15. A computer program for making a network topology discovery, **wherein** said computer program, when executed on a computer, causes the computer to perform the steps of the method according to claim 1.
